# FASCICULE DE BREVET EUROPEEN

(11) **EP 3 137 427 B1**
(45) Date de publication et mention de la délivrance du brevet: **10.03.2021**
(21) Numéro de dépôt: 15723272.9
(22) Date de dépôt: 28.04.2015
(51) Int. Cl.: C03C 3/085, C03C 3/087, C03C 3/093, C03C 10/00

(54) **PLAQUE EN VERRE PARTIELLEMENT CRISTALLISE**
TEILWEISE KRISTALLISIERTE GLASPLATTE
PARTIALLY CRYSTALLISED GLASS PLATE

(30) Priorité: 29.04.2014 FR 1453866
(43) Date de publication de la demande: 08.03.2017
(73) Titulaire: Eurokera S.N.C., 02400 Château-Thierry (FR)
(72) Inventeur: PLEVACOVA, Kamila, 75017 Paris (FR); LECOMTE, Emmanuel, 02400 Nesles la Montagne (FR)
(74) Mandataire: Saint-Gobain Recherche
(86) Numéro de dépôt international: PCT/FR2015/051148
(87) Numéro de publication internationale: WO 2015/166183

(56) Documents cités:
- FR-A1- 2 988 465
- JP-A- 2002 154 840
- US-A- 3 540 893
- US-A- 5 070 045
- US-A1- 2013 085 058
- BARRY T I ET AL: "Glass ceramics for intermediate seals in lamps with fused quartz envelopes", GLASS TECHNOLOGY,, vol. 17, no. 2, 2 avril 1976 (1976-04-02), pages 60-65, XP001277620,

## Description

L'invention se rapporte au domaine des plaques de verre, en particulier utilisées dans des dispositifs de cuisson par induction, comme panneaux de portes ou vitres de four, ou encore comme inserts de cheminées.

Les applications précitées requièrent des plaques présentant une résistance thermomécanique élevée, en particulier une excellente résistance au choc thermique, ainsi qu'une résistance aux atmosphères corrosives à haute température Les documents XP001277620, US20130085058-A1, FR2988465-A1, US5070045-A, JP2002154840-A et US3540893-A décrivent des verres similaires à ceux utilisés pour les plaques de la présente invention.

L'invention a pour but de proposer des plaques de verre particulièrement bien adaptées à ces applications.

A cet effet, l'invention a pour objet une plaque en verre partiellement cristallisé telle que définie à la revendication 1.

Les inventeurs ont pu mettre en évidence que la cristallisation partielle d'un verre présentant une telle composition permettait d'obtenir un matériau à forte résistance thermomécanique et chimique. Le matériau se présente sous la forme d'un verre contenant en son sein une certaine proportion de cristaux. Les cristaux présentent avantageusement une taille moyenne d'au plus 1 µm, notamment 500 nm et même 100 nm de manière à ce que la plaque soit suffisamment transparente.

De préférence, la plaque comprend au sein du verre des cristaux de structure β-quartz, afin de régler le coefficient de dilatation thermique linéaire dans la gamme souhaitée. Le coefficient de dilatation thermique linéaire de la plaque est de préférence compris dans un domaine allant de 25 à 38.10⁻⁷/K, notamment de 30 à 35.10⁻⁷/K. Le coefficient de dilatation thermique linéaire est mesuré selon la norme ISO 7991 :1987 entre 20 et 300°C.

La composition chimique de la plaque selon l'invention comprend de préférence (ou consiste essentiellement en) les constituants suivants, variant dans les limites pondérales ci-après définies :

| | |
|---|---|
| SiO₂ | 55-70%, notamment 65-70% |
| Al₂O₃ | 12-25%, notamment 18-21% |
| B₂O₃ | 0-0,5%, notamment 0 |
| Li₂O | 1-1,8%, notamment 1,2-1,8% |
| K₂O | 0-<3%, notamment 0-2% |
| Na₂O | 0-<3%, notamment 0-2% |
| Li₂O+Na₂O+K₂O | 1-<5% |
| CaO | 0-10%, notamment 0-5% |
| MgO | 0-5%, notament 1-4% |
| SrO | 0-5%, notamment 0-3% |
| BaO | 0-5%, notamment 0-2% |
| ZnO | 0-5%, notamment 1-3% |
| RO | 2-10% |
| (où RO = MgO+CaO+SrO+BaO+ZnO) | |
| TiO₂ | 0,5-3% |
| ZrO₂ | 0,3-2% |
| SnO₂ | 0-1%, notamment 0,2-1% |
| As₂O₃+Sb₂O₃ | <0,1%. |

L'expression « consiste essentiellement en » doit être comprise en ce sens que les oxydes précités constituent au moins 96%, voire 98% du poids du verre.

La silice (SiO₂) est le principal oxyde formateur du verre. De fortes teneurs vont contribuer à augmenter la viscosité du verre au-delà de ce qui est acceptable, tandis que des teneurs trop faibles vont augmenter le coefficient de dilatation thermique. L'alumine (Al₂O₃) contribue également à augmenter la viscosité du verre et à diminuer son coefficient de dilatation. Son effet est bénéfique sur le module de Young.

Les oxydes alcalino-terreux (en particulier la chaux CaO) ainsi que l'oxyde de baryum (BaO) sont utiles pour faciliter la fusion du verre et son affinage, de par leur effet de réduction de la viscosité à haute température.

Les oxydes alcalins, et plus particulièrement la soude Na₂O et la potasse K₂O présentent l'inconvénient d'augmenter le coefficient de dilatation thermique, si bien que leur teneur est limitée. La teneur en Li₂O est avantageusement comprise entre 1,2 et 1,8% et de préférence d'au plus 1,5%. De faibles teneurs en oxyde de lithium autorisent en outre l'emploi de porteurs de lithium économiques contenant des impuretés colorantes, par exemple de l'oxyde de fer, telles que le spodumène, des feldspaths lithiques, de la pétalite, ou encore du calcin de verre ou de vitrocéramique de composition adaptée à la réalisation de tables de cuisson. Ce dernier point est particulièrement avantageux dans le cas de plaques présentant une transmission lumineuse élevée et incolores (plaques claires).

Les oxydes de titane (TiO₂) et de zirconium (ZrO₂) sont des agents de nucléation permettant notamment la formation des cristaux de structure β-quartz. La teneur en TiO₂ est comprise entre 0,5 et 3%. La teneur en ZrO₂ est comprise entre 0,3 et 2%. Le ratio molaire TiO₂:ZrO₂ est compris entre 3:1 et 6:1, de préférence entre 4:1 et 6:1. Ainsi il est possible d'obtenir un verre partiellement cristallisé présentant un coefficient de dilatation linéaire est compris entre 20 et 40.10⁻⁷/K. Par ailleurs, une teneur en ZrO₂ limitée permet de réduire la température au liquidus et l'énergie nécessaire à la fabrication du verre.

La composition du verre peut comprendre d'autres constituants.

Il peut s'agir d'agents d'affinage, en une teneur généralement d'au plus 1% ou 2%, notamment choisis parmi les sulfates, les halogènes (notamment le chlore), les sulfures (notamment le sulfure de zinc), les oxydes d'arsenic, d'antimoine, de fer, d'étain, de cérium, de vanadium, ou l'un quelconque de leurs mélanges. Les agents d'affinage servent à débarrasser le verre fondu de toutes inclusions gazeuses. Parmi ces agents, l'oxyde d'étain est particulièrement préféré, et sa teneur massique est avantageusement comprise dans un domaine allant de 0,1%, notamment 0,2%, à 0,6%, notamment 0,5%. La composition chimique de la plaque selon l'invention est de préférence telle que la somme des teneurs pondérales en oxyde d'arsenic et en oxyde d'antimoine est d'au plus 0,1%, notamment est nulle. La composition chimique de la plaque selon l'invention comprend de préférence de l'oxyde d'étain SnO₂ en une teneur pondérale d'au plus 1%.

Il peut également s'agir d'agents colorants, tels que les oxydes de fer, de cobalt, de vanadium, de cuivre, de chrome, de nickel le sélénium ou les sulfures. Dans la plupart des applications, en particulier pour les plaques utilisées comme panneaux de portes ou vitres de four ou comme inserts de cheminées ou comme vitrages résistant au feu, la teneur en agents colorants sera la plus faible possible pour que la plaque soit bien incolore et présente une transmission lumineuse la plus élevée possible. Les agents colorants ne seront alors, le cas échéant, présents qu'en tant qu'impuretés, à l'état de trace. La teneur en oxyde de fer, présent comme impureté dans la plupart des matières premières est de préférence d'au plus 400 ppm (1 ppm = 0,0001%), notamment 200 ppm et même 100 ppm.

La plaque de verre partiellement cristallisé possède de préférence une épaisseur comprise dans un domaine allant de 1 à 8 mm, notamment de 2 à 6 mm, voire de 2 à 4 mm. Ses dimensions latérales vont typiquement de 30 cm à 200 cm, notamment de 50 cm à 150 cm.

La plaque selon l'invention possède de préférence un facteur de transmission lumineuse (selon la norme EN 410) d'au moins 50%, notamment 60% et même 70% ou 80%, voire 85% ou 90%. De telles valeurs sont particulièrement appréciables dans le cas de plaques utilisées comme portes de four, inserts de cheminée, vitrages anti-feu, afin d'assurer la meilleure visibilité possible aux utilisateurs.

L'invention a également pour objet un procédé d'obtention d'une plaque selon l'invention, comprenant une étape de fusion du verre, une étape de formage dudit verre sous forme de plaque, puis une étape de cristallisation.

La fusion est typiquement réalisée dans des fours réfractaires à l'aide de brûleurs utilisant comme comburant de l'air ou, mieux, de l'oxygène, et comme combustible du gaz naturel ou du fioul. Des résistances en molybdène ou en platine immergées dans le verre en fusion peuvent également apporter toute ou partie de l'énergie utilisée pour obtenir un verre fondu. Des matières premières (silice, spodumène, pétalite etc.) sont introduites dans le four et subissent sous l'effet des hautes températures diverses réactions chimiques, telles que des réactions de décarbonatation, de fusion proprement dite... Comme indiqué précédemment, la composition selon l'invention permet d'obtenir des plaques claires en utilisant des porteurs de lithium économiques contenant des impuretés colorantes. Le mélange de matières premières contient donc de préférence au moins une matière choisie parmi le spodumène, la pétalite, un feldspath lithifère ou du calcin de vitrocéramique utilisée comme plaque de cuisson, ou encore du calcin de verre-mère d'une telle vitrocéramique. La température maximale atteinte par le verre est typiquement d'au moins 1500°C, notamment comprise entre 1600 et 1700°C. Le formage du verre en plaques peut se faire de manière connue par laminage du verre entre des rouleaux métalliques ou céramiques, par étirage (vers le haut ou vers le bas) ou encore par flottage, technique consistant à déverser le verre fondu sur un bain d'étain en fusion.

L'étape de cristallisation implique de préférence un cycle thermique mettant en œuvre une montée en température vers une température de cristallisation comprise dans un domaine allant de 850 à 1000°C, notamment de 900 à 960°C. Le choix des températures et/ou des temps de cristallisation, à adapter à chaque composition, permet d'ajuster le coefficient de dilatation thermique du matériau obtenu en faisant varier la nature et la quantité de cristaux. De préférence, le cycle thermique comprend une montée vers une température comprise entre 650°C et 850°C pendant une durée de 5 à 60 minutes puis une montée vers une température comprise entre 850 et 1000°C pendant une durée de 5 à 60 minutes.

Un autre objet de l'invention est un dispositif de cuisson par induction comprenant au moins une plaque selon l'invention et au moins un inducteur.

Il est préférable que la plaque de verre soit apte à dissimuler les inducteurs, le câblage électrique, ainsi que les circuits de commande et de contrôle du dispositif de cuisson. A cet effet il est possible de munir une partie de la surface de la plaque (celle qui dans le dispositif de cuisson est située au regard des éléments à dissimuler) d'un revêtement déposé sur et/ou sous la plaque, ledit revêtement ayant la capacité d'absorber et/ou de réfléchir et/ou de diffuser le rayonnement lumineux. Le revêtement peut être déposé sous la plaque, c'est-à-dire sur la surface en regard des éléments internes du dispositif, aussi appelée « face inférieure », et/ou sur la plaque, c'est-à-dire en face supérieure. Le revêtement peut être une couche à base organique, telle qu'une couche de peinture, de résine ou de laque, ou une couche à base minérale, telle qu'un émail ou une couche métallique ou d'un oxyde, nitrure, oxynitrure, oxycarbure d'un métal. De préférence, les couches organiques seront déposées en face inférieure, tandis que les couches minérales, notamment les émaux, seront déposées en face supérieure. Les différents éléments internes du dispositif de cuisson peuvent également être dissimulés par une feuille opaque disposée entre ces derniers et la plaque, par exemple une feuille de mica. Alternativement ou cumulativement, la composition du verre peut comprendre des agents de coloration tels que l'oxyde de fer, présent comme impureté dans la plupart des matières premières, l'oxyde de cobalt, de chrome, de cuivre, de vanadium, de nickel, ou encore le sélénium. La teneur pondérale totale en agents de coloration est normalement d'au plus 2%, voire 1%. L'introduction d'un ou de plusieurs de ces agents peut conduire à obtenir une plaque de verre sombre, de très faible transmission lumineuse (typiquement d'au plus 3%, notamment 2% et même 1%), qui présentera l'avantage de dissimuler les inducteurs, le câblage électrique, ainsi que les circuits de commande et de contrôle du dispositif de cuisson.

Outre la plaque en verre et au moins un inducteur (de préférence trois voire quatre et même cinq), le dispositif de cuisson peut comprendre au moins un dispositif émettant de la lumière, au moins un dispositif de commande et de contrôle, l'ensemble étant compris dans un caisson.

Un, le ou chaque dispositif émettant de la lumière est avantageusement choisi parmi les diodes électroluminescentes (par exemple faisant partie d'afficheurs à 7 segments), les afficheurs à cristaux liquides (LCD), à diodes électroluminescentes, éventuellement organiques (OLED), les afficheurs fluorescents (VFD). Les couleurs vues au travers de la plaque sont diverses : rouge, vert, bleu, et toutes les combinaisons possibles, dont le jaune, le violet, le blanc... Ces dispositifs émettant de la lumière peuvent être purement décoratifs, par exemple séparer visuellement différentes zones de la plaque. Le plus souvent toutefois ils auront un rôle fonctionnel en affichant diverses informations utiles pour l'utilisateur, notamment indication de la puissance de chauffe, de la température, de programmes de cuisson, de temps de cuisson, de zones de la plaque dépassant une température prédéterminée. Les dispositifs de commande et de contrôle comprennent généralement des touches sensitives, par exemple du type capacitif ou à infrarouge. L'ensemble des éléments internes est généralement fixé à un caisson, souvent métallique, qui constitue donc la partie inférieure du dispositif de cuisson, normalement dissimulé dans le plan de travail ou dans le corps de la cuisinière.

Un autre objet de l'invention est une porte de four domestique comprenant au moins une plaque selon l'invention, notamment en tant que plaque de verre destinée à être la plus proche de l'enceinte dudit four.

La porte de four selon l'invention comprend de préférence une plaque de verre interne et une plaque de verre externe, ces deux plaques formant les deux faces planes principales extérieures de la porte, de sorte qu'une fois la porte montée sur le four, la plaque de verre interne se trouve être la plus proche de l'enceinte du four, et la plaque externe se trouve être la plus proche de l'utilisateur. La porte de four selon l'invention comprend de préférence au moins une plaque de verre intermédiaire située entre la plaque de verre interne et la plaque de verre externe, et séparée de chacune de ces dernières par au moins une lame d'air. Une porte préférée comprend trois ou quatre plaques de verre, et donc une ou deux plaque (s) de verre intermédiaire(s).

Au moins une plaque de verre, notamment une plaque de verre intermédiaire, est avantageusement revêtue d'une couche bas-émissive, notamment d'une couche d'un oxyde transparent électroconducteur (TCO), tel que par exemple l'oxyde d'étain dopé, notamment au fluor ou à l'antimoine. La présence de telles couches permet de réduire les échanges de chaleur entre les plaques de verre, contribuant ainsi à améliorer l'isolation thermique de la porte.

Un autre objet de l'invention est un insert de cheminée comprenant au moins une plaque de verre selon l'invention.

L'invention a enfin pour objet un vitrage résistant au feu comprenant au moins une plaque de verre selon l'invention.

Les exemples de réalisations qui suivent illustrent l'invention sans la limiter.

Des verres possédant les compositions chimiques présentées au tableau 1 ont été fondus et mis en forme de plaque.

Les plaques obtenues ont ensuite été partiellement cristallisées en leur faisant subir un cycle thermique caractérisé par un chauffage rapide jusqu'à 590°C puis une montée jusqu'à 820°C à une vitesse de 10°C/min et enfin une montée jusqu'à 930°C à une vitesse de 20°C/min suivi d'un maintien pendant 6 minutes à cette température.

Le tableau 1 ci-après indique pour chaque exemple, outre la composition chimique exprimée en pourcentages pondéraux, la température au liquidus, les températures correspondant à une viscosité de 10⁴ et 10¹³ poises (1 poise = 0,1 Pa.s) notées respectivement T4 et T13, ainsi que le coefficient de dilatation thermique linéaire (noté CTE) pour le verre ainsi que pour le verre partiellement cristallisé. Les coefficients de dilatation thermique linéaire sont mesurés selon la norme ISO 7991 :1987 entre 20 et 300°C.

**Tableau 1**

| | 1 | 2 |
|---|---|---|
| SiO₂ | 67,0 | 66,9 |
| Al₂O₃ | 19,6 | 19,6 |
| Na₂O | 0,2 | 1,3 |
| K₂O | 0,2 | 1,6 |
| Li₂O | 1,5 | 1,5 |
| MgO | 1,2 | 3,0 |
| BaO | 0,8 | 0,8 |
| CaO | 4,2 | 0 |
| TiO₂ | 2,6 | 2,6 |
| ZrO₂ | 0,8 | 0,8 |
| ZnO | 1,6 | 1,6 |
| SnO₂ | 0,3 | 0,3 |
| | | |
| Liquidus (°C) | <1350 | 1310 |
| T4 (°C) | 1344 | 1351 |
| T13 (°C) | 724 | 700 |
| CTE (10-7/°C) | 43 | 44 |
| | | |
| Verre cristallisé | | |
| CTE (10-7/°C) | 34 | 37 |
| Transmission lumineuse (%) | 89 | 82 |

## Revendications

1. Plaque en verre partiellement cristallisé, dont le coefficient de dilatation thermique linéaire est compris dans un domaine allant de 20 à 40.10⁻⁷/K, et dont la composition chimique comprend les constituants suivants, variant dans les limites pondérales ci-après définies :
| | |
|---|---|
| SiO₂ | 55-70% |
| Al₂O₃ | 12-25% |
| Li₂O | 1-1,8% |
| K₂O | 0-<3% |
| Na₂O | 0-<3% |
| Li₂O+Na₂O+K₂O | 1-<7% |
| RO | 2-10% |
| (où RO = MgO+CaO+SrO+BaO+ZnO) | |
| TiO₂ | 0,5-3% |
| ZrO₂ | 0,3-2%, |
le ratio molaire TiO₂:ZrO₂ étant compris entre 3:1 et 6:1.

2. Plaque selon la revendication 1, dont la composition chimique est telle que la teneur pondérale en Li₂O et comprise entre 1,2 et 1,8%.

3. Plaque selon l'une des revendications précédentes, dont la composition chimique est telle que le ratio molaire TiO₂:ZrO₂ est compris entre 4:1 et 6:1.

4. Plaque selon l'une des revendications précédentes, dont la composition chimique est telle que la somme des teneurs pondérales en oxyde d'arsenic et en oxyde d'antimoine est d'au plus 0,1%, notamment est nulle.

5. Plaque selon l'une des revendications précédentes, dont la composition chimique comprend de l'oxyde d'étain SnO₂ en une teneur pondérale d'au plus 1%.

6. Plaque selon l'une des revendications précédentes, comprenant au sein du verre des cristaux de structure β-quartz.

7. Plaque selon l'une des revendications précédentes, qui possède un facteur de transmission lumineuse d'au moins 50%, notamment 80%.

8. Procédé d'obtention d'une plaque selon l'une des revendications précédentes, comprenant une étape de fusion du verre, une étape de formage dudit verre sous forme de plaque, puis une étape de cristallisation à une température comprise entre 850 et 1000°C.

9. Dispositif de cuisson par induction comprenant au moins une plaque selon l'une des revendications 1 à 7 et au moins un inducteur.

10. Porte de four domestique comprenant au moins une plaque selon l'une des revendications 1 à 7, notamment en tant que plaque de verre destinée à être la plus proche de l'enceinte dudit four.

11. Insert de cheminée comprenant au moins une plaque de verre selon l'une des revendications 1 à 7.

12. Vitrage résistant au feu comprenant au moins une plaque de verre selon l'une des revendications 1 à 7.

## Patentansprüche

1. Teilweise kristallisierte Glasplatte mit einem linearen Wärmeausdehnungskoeffizienten in einem Bereich von 20 bis 40x10⁻⁷/K, deren chemische Zusammensetzung die folgenden Bestandteile umfasst, die innerhalb der nachstehend definierten Gewichtsgrenzen variieren:
| | |
|---|---|
| SiO₂ | 55-70 % |
| Al₂O₃ | 12-25 % |
| Li₂O | 1-1,8 % |
| K₂O | 0 - <3 % |
| Na₂O | 0 - <3 % |
| Li₂O + Na₂O + K₂O | 1 - <7 % |
| RO | 2 - 10 % |
| (wobei RO = MgO + CaO + SrO + BaO + ZnO) | |
| TiO₂ | 0,5 - 3 % |
| ZrO₂ | 0,3 - 2 %, |
wobei das Molverhältnis TiO₂:ZrO₂ zwischen 3:1 und 6:1 liegt.

2. Platte nach Anspruch 1, deren chemische Zusammensetzung so ist, dass der Gewichtsanteil von Li₂O zwischen 1,2 und 1,8 % liegt.

3. Platte nach einem der vorhergehenden Ansprüche, deren chemische Zusammensetzung so ist, dass das Molverhältnis TiO₂:ZrO₂ zwischen 4:1 und 6:1 liegt.

4. Platte nach einem der vorhergehenden Ansprüche, deren chemische Zusammensetzung so ist, dass die Summe der Gewichtsanteile von Arsenoxid und Antimonoxid höchstens 0,1%, insbesondere Null beträgt.

5. Platte nach einem der vorhergehenden Ansprüche, deren chemische Zusammensetzung Zinnoxid SnO₂ in einem Gewichtsanteil von höchstens 1 % enthält.

6. Platte nach einem der vorhergehenden Ansprüche, die innerhalb des Glases Kristalle einer β-Quarzstruktur umfasst.

7. Platte nach einem der vorhergehenden Ansprüche, die einen Lichttransmissionsfaktor von mindestens 50 %, insbesondere 80 % aufweist.

8. Verfahren zur Herstellung einer Platte nach einem der vorhergehenden Ansprüche, umfassend einen Schritt des Schmelzens des Glases, einen Schritt des Formens des Glases in Form einer Platte,dann einen Schritt des Kristallisierens bei einer Temperatur zwischen 850 und 1000 °C.

9. Induktionskochvorrichtung mit mindestens einer Platte nach einem der Ansprüche 1 bis 7 und mindestens einem Induktor.

10. Haushaltsofentür, umfassend mindestens eine Platte nach einem der Ansprüche 1 bis 7, insbesondere als Glasplatte, die dazu bestimmt ist, der Umschließung des Ofens am nächsten zu sein.

11. Kamineinsatz, umfassend mindestens eine Glasplatte nach einem der Ansprüche 1 bis 7.

12. Feuerbeständige Verglasung, umfassend mindestens eine Glasplatte nach einem der Ansprüche 1 bis 7.

## Claims

1. A partially crystalline glass plate, the linear thermal expansion coefficient of which is within a range extending from 20 to 40×10⁻⁷/K and the chemical composition of which comprises the following constituents, varying within the limits by weight defined below:
| | |
|---|---|
| SiO₂ | 55-70% |
| Al₂O₃ | 12-25% |
| Li₂O | 1-1.8% |
| K₂O | 0-<3% |
| Na₂O | 0-<3% |
| Li₂O+Na₂O+K₂O | 1-<7% |
| RO | 2-10% |
| (where RO = MgO+CaO+SrO+BaO+ZnO) | |
| TiO₂ | 0.5-3% |
| ZrO₂ | 0.3-2% |
the TiO₂:ZrO₂ molar ratio being between 3:1 and 6:1.

2. The plate as claimed in claim 1, the chemical composition of which is such that the content by weight of Li₂O is between 1.2 and 1.8%.

3. The plate as claimed in one of the preceding claims, the chemical composition of which is such that the TiO₂:ZrO₂ molar ratio is between 4:1 and 6:1.

4. The plate as claimed in one of the preceding claims, the chemical composition of which is such that the sum of the contents by weight of arsenic oxide and antimony oxide is at most 0.1%, in particular is zero.

5. The plate as claimed in one of the preceding claims, the chemical composition of which comprises tin oxide SnO₂ in a content by weight of at most 1%.

6. The plate as claimed in one of the preceding claims, comprising, within the glass, crystals of β-quartz structure.

7. The plate as claimed in one of the preceding claims, which has a light transmission factor of at least 50%, in particular 80%.

8. A process for obtaining a plate as claimed in one of the preceding claims, comprising a step of melting the glass, a step of shaping said glass in the form of a plate and then a step of crystallization.

9. An induction cooking device comprising at least one plate as claimed in one of claims 1 to 7 and at least one inductor.

10. A domestic oven door comprising at least one plate as claimed in one of claims 1 to 7, in particular as glass plate intended to be the closest to the chamber of said oven.

11. A fireplace insert comprising at least one glass plate as claimed in one of claims 1 to 7.

12. A fire-resistant glazing comprising at least one glass plate as claimed in one of claims 1 to 7.
